# EUROPÄISCHE PATENTANMELDUNG

(11) **EP 2 805 595 A1**
(43) Veröffentlichungstag der Anmeldung: **26.11.2014**
(21) Anmeldenummer: 14401055.0
(22) Anmeldetag: 12.05.2014
(51) Int. Cl.: A01C 5/06

(54) **Schar**

(30) Priorität: 23.05.2013 DE 102013105247; 04.11.2013 DE 102013112076
(71) Anmelder: Amazonen-Werke H. Dreyer GmbH & Co. KG, 49205 Hasbergen (DE)
(72) Erfinder: Reinke, Wilfried, 26132 Oldenburg (DE)

(57) **Zusammenfassung**

Schar (1), insbesondere Säschar für das Direktsäverfahren mit einem auf der der Fahrtrichtung (5) zugewandten Seite des Säschares angeordneten Aufreißkörper (2, 2') zum Aufreißen des Bodens zur Schaffung einer Furche, wobei im unteren Bereich (6) des Aufreißkörpers eine Aufreißspitze (4) angeordnet ist, die vorzugsweise zumindest ebenso schmal wie der Aufreißkörper selbst ist, wobei die untere Seite (6) des Aufreißkörpers nach hinten-oben verläuft, wobei der Aufreißkörper zumindest teilweise aus Hartmetall besteht. Um für schwierige Einsatzfälle, bei denen der Boden sehr schnell in die vom Schar gerissene Furche zurückfließt, eine weitere Erhöhung der Standzeit des Schares für eine gute Ausgestaltung der vom Schar gerissenen Furche zu erreichen. Ist vorgesehen, dass der gesamte Aufreißkörper aus Hartmetall besteht.

## Beschreibung

Die Erfindung betrifft ein Schar gemäß des Oberbegriffes des Patentanspruches 1.

Ein derartiges Schar ist in der DE 32 23 376 C2 beschrieben. Dieses Schar ist als Meißelsäschar ausgebildet und weist im vorderen Bereich der Aufreißspitze eine Panzerung auf. Diese Panzerung beschränkt sich jeweils auf den vorderen aufrechten und vorderen unteren Bereich der Aufreißspitze. Mittels dieser Panzerung im vorderen Bereich der Aufreißspitze wird der Verschleiß erheblich reduziert und somit die Standzeit der Aufreißspitze des Schares erhöht. Nun hat sich beim Einsatz dieses Schares gezeigt, dass der hinter der Panzerung gelegene Bereich des Schares, der aus nicht hochverschleißfestem Material besteht, auf manchen Böden, die sehr schnell zurückfließen, relativ schnell verschleißt, so dass schon nach verhältnismäßig kurzer Einsatzzeit die Furche nicht mehr optimal ausgebildet wird.

Der Erfindung liegt die Aufgabe zu Grunde, für die vorgenannten Einsatzfälle eine weitere Erhöhung der Standzeit des Schares für eine gute Ausgestaltung der vom Schar gerissenen Furche zu erreichen.

Diese Aufgabe wird erfindungsgemäß dadurch gelöst, dass der gesamte Aufreißkörper aus Hartmetall besteht.

Infolge dieser Maßnahme wird auch unter schwierigen Einsatzbedingungen der gesamte mit dem Boden in Berührung kommende Bereich des Aufreißkörpers vor einem zu großen Verschleiß in einfacher Weise geschützt. Die Standzeit des Aufreißkörpers wird erheblich erhöht. Hierdurch wird bei einem Säschar in einfachster Weise auch sichergestellt, dass über eine sehr lange Zeit eine Furche von der Zinkenspitze des Aufreißkörpers geformt wird, in der das Saatgut bis auf den Grund der Furche platziert werden kann.

Um mit einer möglichst geringen Masse von Hartmetall eine optimierte Ausgestaltung des Aufreißkörpers zu erreichen, ist vorgesehen, dass der Aufreißkörper auf der aufrechten Vorderseite und Rückseite und der unteren Seite auf beiden Seiten jeweils einen von der Seite gesehen U-förmig verlaufenden breiteren Randbereich als im mittleren vom Randbereich eingeschlossenen Bereich aufweist.

Eine einfache vorteilhafte Ausgestaltung des Aufreißkörpers lässt sich dadurch erreichen, dass der Aufreißkörper einen doppel-T-förmigen Querschnitt in einer zumindest annähernd horizontal verlaufenden Ebene in Arbeitslage des Aufreißkörpers aufweist.

In einer Ausführung ist vorgesehen, dass das Hartmetall des Aufreißkörpers dass das Hartmetall des Aufreißkörpers eine Wolfram-Carbid-Legierung ist.

In der weiteren Ausführung ist vorgesehen, dass der Aufreißkörper im Querschnitt rechteckig ausgebildet ist. Somit weist der Aufreißkörper überall eine gleichbleibende Dicke auf.

Das erfindungsgemäße Schar ist zum Einsatz in Bodenbearbeitungsgeräten und/oder Sämaschinen vorgesehen.

Weitere Einzelheiten der Erfindung sind der Beispielsbeschreibung zu entnehmen. Die Zeichnungen zeigen
- Fig. 1: ein Säschar in Teilansicht, perspektivischer Darstellung und in Prinzipdarstellung,
- Fig. 2: das Säschar in einer anderen perspektivischen Ansicht,
- Fig. 3: den Meißel des Meißelschares in perspektivischer Darstellung,
- Fig. 4: ein weiteres Säschar mit einem anders ausgestalteten Aufreißkörper in Teilansicht, perspektivischer Darstellung, in Prinzipdarstellung gemäß Fig. 2 und
- Fig. 5: den Meißel des Meißelsäschares gemäß Fig. 4 in perspektivischer Darstellung

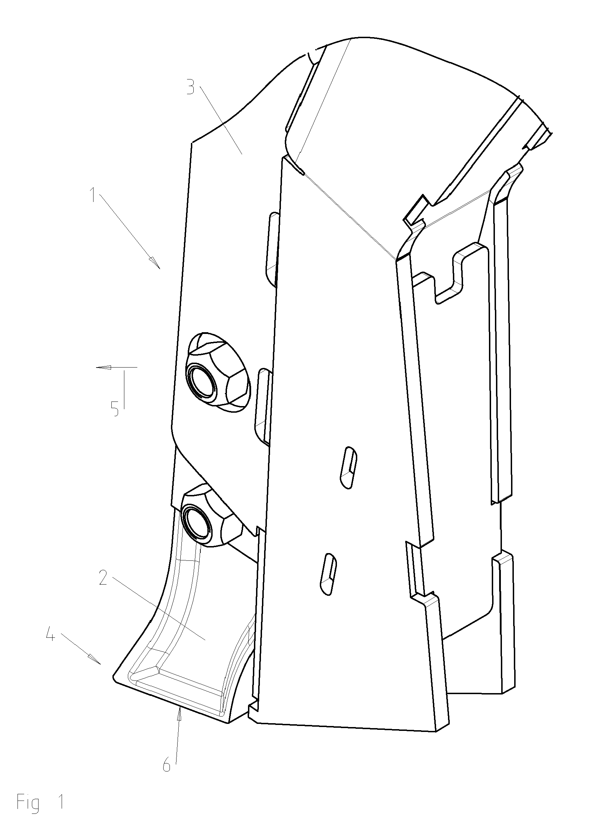

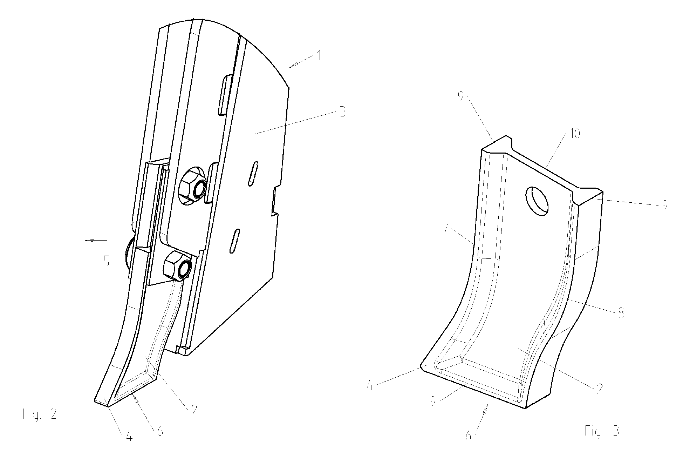

Das erfindungsgemäße Schar 1 mit dem Aufreißkörper 2 ist im Ausführungsbeispiel als Meißelsäschar zum Einsatz in einer nicht dargestellten Sämaschine vorgesehen. Die Sämaschine zum Einsatz zur Direktsaat und zur Mulchsaat weist in nicht dargestellter Weise an einem Rahmen beabstandet zueinander angeordnete Meißelsäschare 1 auf, von dem in den Fig. 1 und 2 nur der untere Bereich dargestellt ist. Hinter dem Säschar 1 ist nicht dargestellter Weise zumindest eine Rolle angeordnet. Die Meißelsäschare 1 werden von den Rollen in ihrer Eindringtiefe in den Boden geführt. Über eine nicht dargestellte pneumatische Förder- und Dosiereinrichtung wird das sich in einem nicht dargestellten Vorratsbehälter befindliche Saatgut den Säscharen 1 über nicht dargestellte Saatleitungen zugeführt. Der Aufreißkörper ist in austauschbarer und lösbarer weise an dem Scharkörper 3 des Schares 1 befestigt.

Im Ausführungsbeispiel weist der Aufreißkörper 2 des Meißelsäschares 1 eine auf Griff stehende Spitze 4 auf. Die Fahrt- und Arbeitsrichtung des Schares 1 ist durch den Pfeil 5 gekennzeichnet.

Die der Fahrtrichtung 5 zugewandten Seite des Aufreißkörpers 2 des Säschares 1 dient zum Aufreißen des Bodens zur Schaffung einer Furche. Im unteren Bereich des Aufreißkörpers 2 ist die Aufreißspitze 5 angeordnet ist, die zumindest ebenso schmal wie der Aufreißkörper 2 selbst ist. Die untere Seite 6 des Aufreißkörpers 2 nach hinten-oben verläuft. Der gesamte Aufreißkörper 2 besteht aus Hartmetall besteht.

Der Aufreißkörper 2 weist auf der aufrechten Vorderseite 7 und Rückseite 8 und der unteren Seite 6 auf beiden Seiten jeweils einen von der Seite gesehen U-förmig verlaufenden breiteren Randbereich 9 als im mittleren vom Randbereich 9 eingeschlossenen Bereich 10 auf. Der Aufreißkörper 2 weist weiterhin einen doppel-T-förmigen Querschnitt in einer zumindest annähernd horizontal verlaufenden Ebene in Arbeitslage des Aufreißkörpers 2.

Das Hartmetall des Aufreißkörpers 2 ist eine Wolfram-Carbid-Legierung.

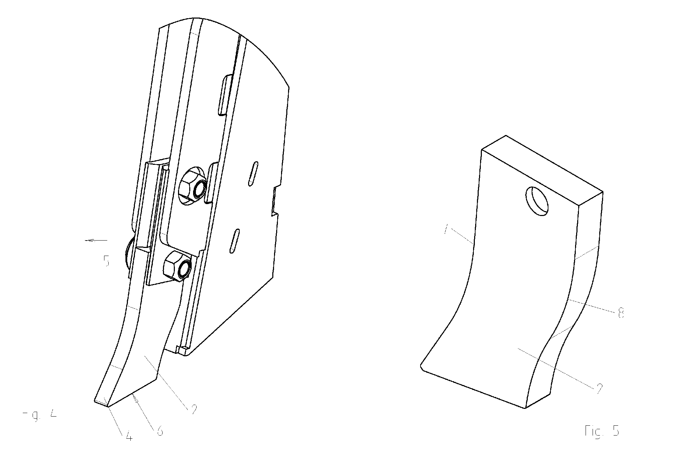

Der als Meißel ausgebildete Meißelkörper 2' gemäß Fig. 4 und 5 unterscheidet sich von dem Aufreißkörper 2 der Fig. 1 bis 3 dadurch, dass der Meißelkörper 2' im Querschnitt rechteckig ohne seitliche Aushöhlung oder Einbuchtungen ausgestaltet ist. Hierdurch ist eine einfache Herstellung möglich.

## Patentansprüche

1. Schar (1), insbesondere Säschar für das Direktsäverfahren mit einem auf der der Fahrtrichtung (5) zugewandten Seite des Säschares (1) angeordneten Aufreißkörper (2) zum Aufreißen des Bodens zur Schaffung einer Furche, wobei im unteren Bereich (6) des Aufreißkörpers (2) eine Aufreißspitze (4) angeordnet ist, die vorzugsweise zumindest ebenso schmal wie der Aufreißkörper (2) selbst ist, wobei die untere Seite (6) des Aufreißkörpers (2) nach hinten-oben verläuft, wobei der Aufreißkörper (2) zumindest teilweise aus Hartmetall besteht, **dadurch gekennzeichnet, dass** der gesamte Aufreißkörper (2) aus Hartmetall besteht.

2. Schar nach Anspruch 1, **dadurch gekennzeichnet, dass** der Aufreißkörper (2) auf der aufrechten Vorderseite (7) und Rückseite (8) und der unteren Seite (6) auf beiden Seiten jeweils einen von der Seite gesehen U-förmig verlaufenden breiteren Randbereich (9) als im mittleren vom Randbereich (9) eingeschlossenen Bereich (10) aufweist.

3. Schar nach zumindest einem der vorstehenden Ansprüche, **dadurch gekennzeichnet, dass** der Aufreißkörper (2) einen doppel-T-förmigen Querschnitt in einer zumindest annähernd horizontal verlaufenden Ebene in Arbeitslage des Aufreißkörpers (2) aufweist.

4. Schar nach zumindest einem der vorstehenden Ansprüche, **dadurch gekennzeichnet, dass** das Hartmetall des Aufreißkörpers (2) eine Wolfram-Carbid-Legierung ist.

5. Schar nach zumindest einem der vorstehenden Ansprüche, **dadurch gekennzeichnet, dass** der Aufreißkörper (2') im Querschnitt rechteckig ausgebildet ist.
